Europäisches Patentamt

European Patent Office

Office européen des brevets

(19)

(11) Publication number: **0 148 835**
**B1**

# EUROPEAN PATENT SPECIFICATION

(12)

(45) Date of publication of patent specification: 29.06.88

(51) Int. Cl.⁴: **C 04 B 35/58**

(21) Application number: 83902833.9

(22) Date of filing: 19.07.83

(86) International application number:
PCT/US83/01112

(87) International publication number:
WO 85/00591 14.02.85 Gazette 85/04

(54) METHOD OF MAKING SILICON NITRIDE COMPRISING OBJECTS.

(43) Date of publication of application:
24.07.85 Bulletin 85/30

(45) Publication of the grant of the patent:
29.06.88 Bulletin 88/26

(84) Designated Contracting States:
DE FR GB SE

(56) References cited:
JP-A-48 026 927
US-A-3 116 137
US-A-3 231 648
US-A-3 311 522
US-A-3 535 132
US-A-3 589 880
US-A-3 632 708
US-A-4 071 372
US-A-4 179 486
US-A-4 215 088
US-A-4 264 548
US-A-4 357 286

No relevant documents have been disclosed

(73) Proprietor: Ford Motor Company
The American Road
Dearborn, MI 48121 (US)
(84) SE

(73) Proprietor: FORD MOTOR COMPANY LIMITED
Eagle Way
Brentwood Essex CM13 3BW (GB)
(84) GB

(73) Proprietor: FORD-WERKE
AKTIENGESELLSCHAFT
Ottoplatz 2 Postfach 21 03 69
D-5000 Köln 21 (DE)
(84) DE

(73) Proprietor: FORD FRANCE SOCIETE ANONYME
344 Avenue Napoléon Bonaparte B.P. 307
F-92506 Rueil Malmaison Cedex (FR)
(84) FR

(72) Inventor: EZIS, Andre
23235 West River Road
Grosse Ile, MI 48138 (US)

(74) Representative: Messulam, Alec Moses
A. Messulam & Co. 24 Broadway
Leigh on Sea Essex SS9 1BN (GB)

Courier Press, Leamington Spa, England.

**0 148 835**

**Description**

The invention relates to a method of making silicon nitride comprising objects.

In the art of making hot pressed or sintered ceramics, graphite has been frequently used to form the elements of the hot pressing or sintering fixture, the fixture being used to contain the ceramic materials for densification. Graphite is selected for such use because it is relatively strong at high temperature conditions (i.e., 1000—2000°C), it has a low modulus of elasticity at high temperatures, and, most importantly, it is excellent for coupling with an induction magnetic field to indirectly heat the ceramic material contained within the graphite elements (see U.S. patents 3,632,708 and 4,071,372). Unfortunately, the graphite frequently reacts with the ceramic material at the high temperature and/or pressure conditions of hot pressing or sintering, forming an unwanted material on the fixture which must be removed for subsequent processing. In sintering, this has been indirectly alleviated by packing of the ceramic material to be sintered in a loose, discardable powder (see U.S. patent 4,179,486) which may add to the cost of complexity of processing.

In the art of nitriding silicon particles to form silicon nitride by gas phase reaction in a heated furnace, graphite has been used only as a structural wall or felt material located remotely from the silicon to be nitrided, thus avoiding the unwanted reaction by intimate contact with the silicon powder (see U.S. Patent 3,244,480).

It would be desirable in the processing of silicon (to a fully dense silicon nitride object) to combine the arts of cold compaction, nitriding, and hot pressing/or sintering in a continuous procedure. This would obviate frequent handling of the materials to be worked and frequent rearrangement of the processed material, all of which is costly and can promote flaws if not carried out correctly.

GB—A—1,393,579 discloses a method of making a shaped body including the steps of compacting powdered silicon into a desired body shape, firing the body in an atmosphere of nitrogen so as to effect complete nitriding of the silicon and then pressure sintering the body to the final shape.

GB—A—1,364,451 discloses a method of forming a plurality of hot pressed silicon nitride articles comprising the steps of loading a succession of charges consisting of silicon nitride powder and a fluxing agent into a hollow mould, the charges being separated from one another by mould separating members and applying heat and pressure to the charges until each charge is converted to a hot pressed dense silicon nitride body.

GB—A—1,405,171 discloses a method of making hot pressed silicon nitride articles comprising the steps of forming a plurality of silicon nitride preforms, positioning the articles in a die cavity and hot pressing the assembled preforms into the required articles.

According to the present invention there is provided a method of making a heat fused silicon nitride comprising objects, comprising step of compacting a powder mixture of silicon and oxygen carrying agents into a preform of desired body shape, heating the body in a nitriding atmosphere at a temperature below the melting point of silicon to convert said body to a nitrided silicon body, said nitrided silicon body having less than required density and a dimension greater than required and heating the nitrided body with pressure normally associated with hot pressing to a temperature above the melting point of silicon to form a nitrided body of required dimension and density characterised in that the method further comprises containerizing a plurality of measured shots of said powder mixture or preforms of desired body shapes in a common assembly to be used for both nitriding and heat fusion steps, the containerization being carried out by lining the internal wall of a graphitic sleeve, treated for inertness, with a refractory metal foil essentially impervious to the migration of carbon ions and having a thickness of .05 cms (.02 inches) or less and inserting said measured shots of the powder mixture or said preforms into said lined sleeve, preselected groups of said powder shots or preforms being separated by an inert spacer and wherein said heating step in the nitrogen atmosphere is carried out by heating said assembly with the shots of powder mixture therein to convert each of said powder mixture shots to a nitrided silicon body consisting essentially of silicon nitride, 5—17% by weight oxynitrides, and less than .5% by weight unreacted oxygen carrying agents, and said hot pressing step is carried out by heating said assembly with the nitrided silicon bodies therein to heat fuse said silicon nitride and oxynitrides together.

Preferably, the impervious foil is selected from the group consisting of Mo, Nb, Ta, and W, and preferably the oxygen carrying agents consist of by weight of the silicon metal mixture 1—3.5 % $SiO_2$, 0.4—4% $Al_2O_3$, and 6.2—17.8% $Y_2O_3$. Preferably, the shots of powder mixture are cold pressed into preformed discs prior to insertion into the sleeve. Preferably, the nitriding involves heating in an evacuated furnace to 650°C, filling the furnace with a nitrogen mixture, and treating to a nitriding temperature above 1000°C at a slower rate of heat-up, while interrupting such heat-up to replenish nitrogen when needed. The heat fusion step is preferably carried out by hot pressing at 1600—1760°C under a pressure of $1.7 \times 10^4$—$2.6 \times 10^4$ kPa (2500—3800 psi).

The invention will now be described further by way of example with reference to the accompanying drawing in which:

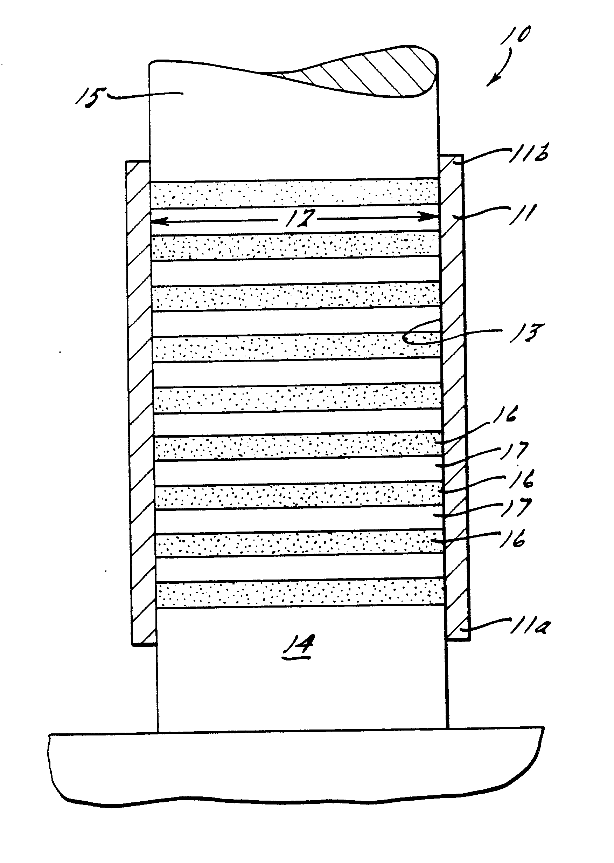

Figure 1 is a central section elevational view of the containerization assembly used in this invention; pistons 14 and 15 are shown for illustration of how pressing assembly fits thereto and are not part of containerization assembly.

2

# 0 148 835

1. Containerization in a common assembly

A series of measured powder shots are containerized in a common assembly 10, the assembly to be used for both nitriding the heat fusion steps. The containerization is carried out as follows:

(a) A graphite sleeve 11, with an internal diameter 12, designed to define approximately the outer diameter of the finished product, has the interior wall thereof lined with a refractory metal foil 13. The sleeve is made inert with respect to surface activity by heat treating the graphitic sleeve in an evacuated furnace to a temperature level of about 550°C for 5—60 minutes, and then heating the graphitic sleeve to a temperature of about 1000°C under a nitrogen atmosphere for 5—60 minutes. The nitrogen may be admitted to the evacuated furnace at such time as the sleeve has been held at the 550°C temperature for at least five minutes.

The refractory metal foil should be of a type that is essentially impervious to the migration of carbon ions therethrough under conditions herein described, and preferably is selected from the group consisting of molybdenum, tantalum, niobium, and tungsten. The thickness of the metal foil should be less than 0.05 cms (0.02 inch) and preferably in the range of 0.0013—0.05 cms (0.0005—0.202 inch), preferably 0.0025 cm (0.001 inch) thick.

Prior to installing the impervious foil, the sleeve may be lined with one or more graphite foils. The graphite foil should be adhered tightly to the inside surface of the sleeve by prior coating of the sleeve interior with boron nitride slurry and then a dried contact adhesive using rolling pressure to eliminate all air pockets. The graphite foil may be coated with a dried contact adhesive on its interior to receive the impervious foil (here molybdenum), again rolling the Mo foil into tight, smooth contact.

(b) A series of measured shots 16 of a powder mixture of silicon and oxygen carrying powder agents are inserted into the lined graphitic sleeve. Essentially, the mixture is of the comonent system comprising Si metal, 1—3.5% $SiO_2$, 6.2—17.8% $Y_2O_3$, and 0.4—4% $Al_2O_3$. Each powder shot is separated (and enclosed at the open ends) by an uncontaminated silicon nitride spacer 17, preferably having a density of no greater than 2.7 gm/cc and is devoid of oxygen carrying agents that promote densification. Each $Si_3N_4$ spacer is coated with a parting agent such as BN. This will preclude fusion between powder shots and spacer material. Each measured shot is preferably in the quantity range of 200—2000 grams, which is effective to provide for a disc shaped billet having a thickness of about 0.5—5 cms (0.20—2.0 inches) and a diameter of approximately 15 cms (6 inches), when the powder shot is fully densified. The thickness of the spacer is in the range of 0.64—1.28 cms (0.25—0.50 inch) and has a diameter substantially equal to the interior diameter 12 of the lined graphitic sleeve.

Alternatively, the shots of powder mixture may be cold pressed to form preforms of a disc shape that will fit closely within the sleeve. The preforms are loaded like chips with a parting agent placed between, which can be Mo, Nb, W, Ta or graphite foil with a BN coating. The sleeve is now loaded with material but essentially open at both ends.

2. Nitriding

The common assembly with the shots of powder mixture therein is heated within a furnace in a nitriding atmosphere to a temperature below the melting point of silicon. Heating in the nitriding atmosphere is carried out for a time suffcient to convert each of the powder mixture shots to a nitrided silicon body consisting essentially of alpha silicon nitride, 5—17% oxynitrides, and less than 0.5% unreacted oxygen carrying agents. The nitrided silicon bodies will each have a density and a dimension less than that to be eventually required in the final product.

A preferred nitriding cycle is to heat the common assembly in an evacuated furnace to a pressure of about minus one micron (μm) and heat at a relatively fast heat-up rate 132°C (about 270°F)/hr to a temperature level of about 950°C. However, intermediate such heat-up rate, a nitrogen containing atmosphere is introduced to the furnace, for example, at a temperature level of about 650°C. The nitrogen containing atmosphere is injected into the furnace until a pressure of about 19kPa (2.7 psig) is obtained. The nitrogen containing atmosphere may consist optimally of a gaseous mixture of nitrogen, about 3% by weight hydrogen, and 20—25% by weight helium. When the temperature level of about 950°C is reached, the common assembly is then heated at a slower heat-up rate (such as 110°C/hr) to about 1095°C. Through subsequent nitriding temperatures of 1095—1404°C, the heat-up rate reduces even more (such as 2—3°C/hr). During such slower heat-up rate, the nitrogen will begin reacting with the silicon causing a depletion of nitrogen within the nitriding atmosphere and thereby requiring replenishment. It is desirable to replenish such nitrogen by a nitrogen demand system whereby upon a sensing of a drop in the furnace atmosphere pressure below a specific amount additional nitrogen is introduced, preferably pure nitrogen without any other diluents. After the common assembly is heated to the ultimate nitriding temperature, and after no further nitrigen depletion is noticed, the common assembly is then heated according the following step.

3. Heat fusion

The common assembly with the nitrided silicon bodies therein is subjected to hot pressing. The hot pressing assembly consists of a pressing frame with hydraulics, to operate a ram, a graphite die assembly with graphite pistons 14 and 15 which fit into the assembly as shown in the Figure (to receive the pressing force), and induction heating coils surrounding the graphite die assembly. The heating is carried out in

3

increments; (1) mechanical loading of 689 kPa (100 psi) is applied to the pistons at room temperature; (2) the temperature is then increased to 1800°F (982°C) and pressure increased to 3445 kPa (500 psi); (3) the temperature is then increased to 2500°F (1371°C) and pressure is simultaneously increased to $1.7 \times 10^4$ kPa (2500 psi); (4) the temperature is finally increased to the ultimate hot pressing temperature of 3182°C (1750°C) and pressure increased to $0.5 \times 10^4$—$2.6 \times 10^4$ kPa (3700—3800 psi), the latter conditions being maintained until at least 99% or desirably 99.5% of theoretical full density is achieved, this usually requires .25—3.0 hours at the hot pressing temperature. The assembly is then cooled at any rate, even quenched, to room temperature. The resulting object will consist of beta silicon nitride, 5—17% by weight silicon oxynitrides, predominantly $Y_1SiO_2N$, enveloped by an aluminium containing silicate phase having a thickness of 2—10 angstroms and having no microporosity. The object will preferably possess a hardness HR of about 88—92 on the 45-N scale, a density of 3.2—3.35 gm/cm$^3$, an average flexural strength greater than $5.87 \times 10^5$ kPa (85,000 psi) at 1200°C in a 4-point bend test, and an oxidation resistance that prevents weight pickup by the object after 450 hours in air at 1000°C.

Examples

A series of silicon nitride billets or samples were prepared and tested under varying conditions of the containerization method to illustrate how variations in processing facilitate or deny obtaining the advantages of this invention. The results are summarized in Table 1. Each sample consisted of filling a graphite sleeve with powder shots and spacers delineated in the preferred mode except as varied in columns 4 and 5. The sleeves were lines with foil again as in the preferred mode except for the variations listed in columns 2 and 3. The assembly was nitrided and hot pressed.

TABLE 1

| Sample | Preparation of graphite sleeve | Use of foil lining | Usage of spacers | Thickness of spacers | Did assembly chemically react with bodies during process? | Were pressed billets dimensionally accurate? |
|---|---|---|---|---|---|---|
| 1 | Inert treated | Mo 0.0025 (0.001″) | Si₃N₄ | 0.95 cms (0.375″) | No | Yes |
| 2 | Not treated | Mo 0.0025 (0.001″) | ″ | ″ | Yes | Some adherence |
| 3 | Inert treated | Ta 0.0025 (0.001″) | ″ | ″ | No | Yes |
| 4 | ″ | W 0.0025 (0.001″) | ″ | ″ | No | Yes |
| 5 | ″ | None | ″ | ″ | Yes | No |
| 6 | ″ | ″ | Graphite | ″ | Yes | Some adherence |

**Claims**

1. A method of making heat fused silicon nitride comprising objects, comprising steps of compacting a powder mixture of silicon and oxygen carrying agents into a preform of desired body shape, heating the body in a nitriding atmosphere at a temperature below the melting point of silicon to convert said body to a nitrided silicon body, said nitrided silicon body having less than required density and a dimension greater than required and heating the nitrided body with pressure normally associated with hot pressing to a temperature above the melting point of silicon to form a nitrided body of required dimension and density characterised in that the method further comprises containerizing a plurality of measured shots of said powder mixture or preforms of desired body shapes in a common assembly to be used for both nitriding and heat fusion steps, the containerization being carried out by lining the internal wall of a graphitic sleeve, treated for inertness, with a refractory metal foil essentially impervious to the migration of carbon ions and having a thickness of 0.05 cms (0.02 inches) or less and inserting said measured shots of the powder mixture or said preforms into said lined sleeve, preselected groups of said powder shots or preforms being separated by an inert spacer and wherein said heating step in the nitrogen atmosphere is carried out by heating said assembly with the shots of powder mixture therein to convert each of said powder mixture shots to a nitrided silicon body consisting essentially of silicon nitride, 5—17% by weight oxynitrides, and less than 0.5% by weight unreacted oxygen carrying agents, and said hot pressing step is carried out by

4

heating said assembly with the nitrided silicon bodies therein to heat fuse said silicon nitride and oxynitrides together.

2. A method as claimed in Claim 1, in which the refractory metal foil is selected from the group consisting of molybdenum, niobium, tantalum and tungsten.

3. A method as claimed in Claim 1 or 2, in which said oxygen carrying agents consist of by weight 1—3.5 % $SiO_2$, 6.2—17.85 $Y_2O_3$, and 0.4—4% $Al_2O_3$.

4. A method as claimed in any one of Claims 1 to 3, in which said heating step in the nitrogen atmosphere comprises heating said assembly in an evacuated furnace to a temperature level of about 1000°C, said furnace being filled with a gaseous mixture of nitrogen prior to reaching said temperature level of 1000°C, continuing to heat to above 1000°C at a slower rate of heat-up while interrupting said heat-up rate to allow for replenishment of nitrogen consumed during such heating as a result of chemical reaction between the silicon and the nitrogen atmosphere.

5. A method as claimed in any one of the preceding claims, in which said hot pressing step is carried out by hot pressing at a temperature of 1600—1760°C under a pressure of $1.7 \times 10^4$—$2.6 \times 10^4$ kPa (2500—3800 psi).

6. A method as claimed in any one of the preceding claims, in which said graphitic sleeve and elements are heat treated to achieve inertness by heating in a vacuum to a temperature level of 550°C and thence to the temperature level of 1000°C under a nitrogen atmosphere.

7. A method as claimed in any one of the preceding claims, in which said inert spacer consists essentially of uncontaminated silicon nitride.

8. A method as claimed in Claim 7, in which the uncontaminated silicon nitride spacer has a density of no greater than 2.7 gm/cc and is devoid of oxygen carrying agents or agents that promote densification.

9. A method as claimed in Claim 8, in which the spacers have a thickness in the range of 0.5—1.28 cms (0.2—0.5 inch).

## Patentansprüche

1. Verfahren zur Herstellung von heissverschmolzenes Siliciumnitrid enthaltenen Gegenständen, wobei man stufenweise ein Pulvergemisch aus Silicium und Sauerstoffträgermitteln zu einem Vorformling der gewünschten Körpergestalt verdichtet, den Körper zu dessen Umwandlung in einen nitrierten Siliciumkörper bei einer Temperatur unter dem Schmelzpunkt von Silicium in einer nitrierenden Atmosphäre erhitzt, wobei dieser nitrierte Siliciumkörper eine geringere Dichte und grössere Abmessungen als erforderlich besitzt, und den nitrierten Körper bei einem üblicherwise zum Heisspressen angewandten Druck zur Bildung eines nitrierten Körpers der erforderlichen Dichte und Abmessungen auf eine Temperatur über dem Schmelzpunkt von Silicium erhitzt, dadurch gekennzeichnet, dass ferner eine Mehrzahl abgemessener Schüsse besagten Pulvergemischs oder Vorformlinge der gewünschten Körpergestalten als vereinigte Baugruppe in Behälter zur Verwendung bei sowohl der Nitrierstufe als auch der Heissverschmelzungsstufe eingebracht wird, wobei die Behälter dadurch gebildet werden, dass man die Innenwand einer zwecks Inertheit behandelten Graphithülse mit einer feuerfesten Metallfolie auskleidet, die für die Wanderung von Kohlenstoffionen weitgehend undurchlässig ist und eine Dicke von 0,05 cm (0,02 Zoll) oder weniger aufweist, und die besagten abgemessenen Pulvergemischschüsse oder Vorformlinge in diese ausgekleidete Hülse einsetzt, wobei vorgewählte Gruppen solcher Pulverschüsse oder Vorformlinge durch einen inerten Abstandshalter voneinander getrennt sind und wobei jene Erhitzungsstufe durch Erhitzen dieser Baugruppe mit den Pulvergemischschüssen darin in der Stickstoffatmosphäre erfolgt, um jeden dieser Pulvergemischschüsse in einen nitrierten Siliciumkörper zu überführen, der im wesentlichen aus Siliciumnitrid, 5—17 Gew.-% Oxynitriden und weniger als 0,5 Gew.-% nicht umgesetzten Sauerstoffträgermitteln besteht, und besagte Heisspressstufe zur Heissverschmelzung dieses Siliciumnitrids mit den Oxynitriden durch Erhitzen dieser Baugruppe mit den nitrierten Siliciumkörpern darin erfolgt.

2. Verfahren nach Anspruch 1, worin die feuerfeste Metallfolie aus der Molybdän, Niob, Tantal und Wolfram umfassenden Gruppe ausgewählt ist.

3. Verfahren nach Anspruch 1 oder 2, worin besagte Sauerstoffträgermittel aus 1—3,5 Gew.-% $SiO_2$, 6,2—17,85 Gew.-% $Y_2O_3$ und 0,4—4 Gew.-% $Al_2O_3$ bestehen.

4. Verfahren nach einem der Ansprüche 1 bis 3, worin besagte Erhitzungsstufe in der Stickstoffatmosphäre darin besteht, dass man jenen Aufbau in einem evakuierten Ofen auf ein Temperaturniveau von etwa 1000°C erhitzt, wobei der Ofen mit einem Gasgemisch aus Stickstoff gefüllt wird, bevor er dieses Temperaturniveau von 1000°C erreicht, das Erhitzen über 1000°C mit geringerer Aufheizgeschwindigkeit fortsetzt, wobei diese Aufheizgeschwindigkeit unterbrochen wird, um Nachfüllen des während dieser Erhitzung als Ergebnis der chemischen Reaktion zwischen dem Silicium und der Stickstoffatmosphäre verbrauchten Stickstoffs zu ermölichen.

5. Verfahren nach einem der vorhergehenden Ansprüche, worin diese Heisspressstufe durch Heisspressen bei einer Temperatur von 1600—1760°C unter einem Druck von $1,7 \cdot 10^4$—$2,6 \cdot 10^4$ (2500—3800 psi) erfolgt.

6. Verfahren nach einem der vorhergehenden Ansprüche, worin besagte Graphithülse und -elemente wärmebehandelt werden, um durch Erhitzen im Vakuum auf ein Temperaturniveau von 550°C und von da auf ein Temperaturniveau von 1000°C unter einer Stickstoffatmosphäre Inertheit zu erreichen.

7. Verfahren nach einem der vorhergehenden Ansprüche, worin jener inerte Abstandshalter im wesentlichen aus unverunreinigtem Siliciumnitrid besteht.

8. Verfahren nach Anspruch 7, worin der unverunreinte Siliciumnitridabstandshalter eine Dichte von höchstens 2,7 g/cm³ aufweist und keine Sauerstoffträgermittel oder verdichtungsfördernde Mittel enthält.

9. Verfahren nach Anspruch 8, worin die Abstandshalter eine Dicke im Bereich 0,5—1,28 cm (0,2—0,5 Zoll) aufweisen.

## Revendications

1. Procédé de fabrication d'objets contenant du nitrure de silicium fusionné par chauffage, comprenant une étape de compression d'un mélange de poudres d'agents contenant du silicium et de l'oxygène, sous forme d'une ébauche ayant la configuration d'un corps voulu, de chauffage du corps en atmosphère nitrurante à une température inférieure à la température de fusion du silicium afin que le corps soit transformé en un corps de silicium nitruré, ce dernier corps de silicium nitruré ayant une masse volumique inférieure à la valeur requise et une dimension supérieure à la valeur requise, et de chauffage du corps nitruré avec application d'une pression normalement associée à une compression à chaud, à une température supérieure à la température de fusion du silicium, afin qu'un corps nitruré de dimension et de masse volumique ayant les valeurs requises soit formé, caractérisé en ce que le procédé comporte en outre le logement, dans un récipient, de plusieurs charges mesurées du mélange de poudres ou de plusieurs ébauches ayant les configurations du corps voulu, dans un ensemble commun destiné à être utilisé à la fois pour les étapes de nitruration et de fusionnement par chauffage, le logement dans un récipient étant réalisé par revêtement de la paroi interne d'un manchon à base de graphite, traitée afin qu'elle soit inerte, avec une feuille en métal réfractaire essentiellement imperméable à la migration des ions carbone et ayant une épaisseur inférieure ou égale à 0,05 cm, et par introduction des charges mesaurées du mélange de poudres ou des ébauches dans le manchon revêtu, des groupes prédéterminés des charges de poudre ou d'ébauches étant séparés par une entretoise inerte, et dans lequel l'étape de chauffage sous atmosphère d'azote est réalisé par chauffage de l'ensemble, contenant les charges de mélange de poudres, afin que chacune des charges de mélange de poudres soit transformée en un corps de silicium nitruré constitué essentiellement de nitrure de silicium, de 5 à 17% en poids d'oxynitrures, et de moins de 0,5 % en poids d'agents contenant de l'oxygène qui n'ont pas réagi, et l'étape de compression à chaud est réalisée par chauffage de l'ensemble, contenant les corps de silicium nitruré, afin de fusionner par chauffage le nitrure de silicium et les oxynitrures.

2. Procédé selon la revendication 1, dans lequel la feuille de métal réfractaire est choisie dans le groupe formé par le molybdène, le niobium, le tantale et le tungstène.

3. Procédé selon l'une des revendications 1 et 2, dans lequel les agents contenant de l'oxygène sont formés par 1 à 3,5 % en poids de $SiO_2$, 6,2 à 17,85 % en poids de $Y_2O_3$ et 0,4 à 4 % en poids de $Al_2O_3$.

4. Procédé selon l'une quelconque des revendications 1 à 3, dans lequel l'étape de chauffage sous atmosphère s'azote comprend le chauffage de l'ensemble dans un four mis sous vide, à une température d'environ 1000°C, le four étant rempli d'un mélange gazeux contenant de l'azote avant d'atteindre la température de 1000°C, la poursuite du chauffage à plus de 1000°C avec une plus faible vitesse de chauffage, avec interruption du chauffage afin que l'azote consommé pendant le chauffage, du fait de la réaction chimique entre le silicium et l'atmosphère d'azote, puisse être renouvelée.

5. Procédé selon l'une quelconque des revendications précédentes, dans lequel l'étape de compression à chaud est réalisée par compression à chaud à une température comprise entre 1600 et 1760°C sous une pression comprise entre $1,7 \cdot 10^4$ et $2,6 \cdot 10^4$ kPa.

6. Procédé selon l'une quelconque des revendications précédentes, dans lequel les éléments et le manchon à base de graphite sont traités thermiquement afin qu'ils soient inertes, par chauffage sous vide à une température de 550°C puis à une température de 1000°C sous atmosphère d'azote.

7. Procédé selon l'une quelconque des revendications précédentes, dans lequel l'entretoise inerte est constituée essentiellement de nitrure de silicium non contaminé.

8. Procédé selon la revendication 7, dans lequel l'entretoise de nitrure de silicium non contaminé à une masse volumique ne dépassant pas 2,7 g/cm³ et est dépourvue d'agents contenant de l'oxygène ou d'agents qui favorisent la densification.

9. Procédé selon la revendication 8, dans lequel les entretoises ont une épaisseur comprise entre 0,5 et 1,28 cm.